(19) Europäisches Patentamt
European Patent Office
Office européen des brevets

(11) EP 3 275 650 B1

(12) EUROPEAN PATENT SPECIFICATION

(45) Date of publication and mention of the grant of the patent:
**22.05.2019 Bulletin 2019/21**

(21) Application number: **16771988.9**

(22) Date of filing: **24.02.2016**

(51) Int Cl.:
***C08J 7/04*** (2006.01) ***B32B 27/18*** (2006.01)
***G02B 5/02*** (2006.01) ***A01N 25/34*** (2006.01)
***A01N 59/16*** (2006.01) *C08L 67/02* (2006.01)

(86) International application number:
**PCT/JP2016/055498**

(87) International publication number:
**WO 2016/158104 (06.10.2016 Gazette 2016/40)**

(54) **BASE MATERIAL HAVING ANTIBACTERIAL LAYER, AND DISPLAY FILM**

BASISMATERIAL MIT ANTIBAKTERIELLER SCHICHT UND ANZEIGEFOLIE

MATÉRIAU DE BASE COMPRENANT UNE COUCHE ANTIBACTÉRIENNE, ET FILM D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2015 JP 2015067395**

(43) Date of publication of application:
**31.01.2018 Bulletin 2018/05**

(73) Proprietor: **FUJIFILM Corporation**
**Tokyo 106-8620 (JP)**

(72) Inventors:
- **NAGASAKI Hideo**
  **Fujinomiya-shi**
  **Shizuoka 418-8666 (JP)**
- **OKAZAKI Kentaro**
  **Fujinomiya-shi**
  **Shizuoka 418-8666 (JP)**

(74) Representative: **Dehns**
**St. Brides House**
**10 Salisbury Square**
**London EC4Y 8JD (GB)**

(56) References cited:
**WO-A1-2014/025040** **WO-A1-2014/069378**
**JP-A- H09 111 020** **JP-A- 2009 216 750**
**JP-A- 2009 216 750** **JP-A- 2011 025 673**
**JP-A- 2013 533 131** **JP-A- 2015 033 851**
**US-A1- 2009 123 723**

- **DATABASE WPI Week 199602 Thomson Scientific, London, GB; AN 1996-017094 XP002777936, & JP H07 291814 A (SINTOKOGIO LTD) 7 November 1995 (1995-11-07)**
- **YUKIO SHIMURA PLASTIC DATA BOOK 01 December 1999, pages 97 - 99, XP009501256**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 275 650 B1

## Description

## BACKGROUND OF THE INVENTION

1. Field of the Invention

The present invention relates to an antibacterial layer-attached base material and a film for a display.

2. Description of the Related Art

In the related art, an antibacterial layer-attached base material having a base material and an antibacterial layer which contains antibacterial agent fine particles is known (for example, refer to JP1995-291814A (JP-H07-291814A)).

WO 2014/025040 A1 discloses an antibacterial transparent film having a base material and a curable resin layer containing antibacterial agent having an average particle diameter of 0.5 to 100 nm. The thickness of the layer is 1 to 10 μm. The plastic base material is preferably PET. The amount of antibacterial agent content is preferably in the range of 0.05 to 20% by mass of the curable resin layer. The antibacterial transparent film is used for adhesive sheet for display and touch screen. It can also be used as hard coat film and antireflection film.

## SUMMARY OF THE INVENTION

In a case of using, for example, a base material, such as polyethylene terephthalate (PET), which has optical anisotropy, as a base material of an antibacterial layer-attached base material, in some cases, anti-glare characteristics of the antibacterial layer-attached base material are insufficient.

The present inventors have been attempted to change the antibacterial layer in order to improve such anti-glare characteristics. As a result, they have found that in some cases, rainbow unevenness or warping occurs in the antibacterial layer-attached base material.

The present invention have been made in consideration of the above-described points, and an object of the present invention is to provide an antibacterial layer-attached base material, which has excellent anti-glare characteristics and in which rainbow unevenness and warping are suppressed, and a film for a display using the antibacterial layer-attached base material.

The present inventors have conducted extensive studies, and as a result, they have found that the above-described object is achieved using the following configuration. That is, the present invention provides the following [1] to [4].

[1] An antibacterial layer-attached base material comprising: a base material having optical anisotropy; and an antibacterial layer which is disposed on at least a part of a surface of the base material, in which the antibacterial layer contains antibacterial agent fine particles and a binder, an average particle diameter of the antibacterial agent fine particles is 0.20 to 1 μm, a thickness of the antibacterial layer is greater than 5 μm and smaller than or equal to 15 μm, and a tensile strength of the base material is greater than or equal to 200 MPa.

[2] The antibacterial layer-attached base material according to the [1], in which the binder is a polymer having a hydrophilic group.

[3] The antibacterial layer-attached base material according to the [1] or [2], in which a content of the antibacterial agent fine particles in the antibacterial layer is greater than or equal to 2.0 mass% with respect to a total mass of the antibacterial layer.

[4] A film for a display using the antibacterial layer-attached base material according to any one of [1] to [3].

According to the present invention, it is possible to provide an antibacterial layer-attached base material, which has excellent anti-glare characteristics and in which rainbow unevenness and warping are suppressed, and a film for a display using the antibacterial layer-attached base material.

## BRIEF DESCRIPTION OF THE DRAWINGS

Fig. 1 is a cross-sectional view of an embodiment of an antibacterial layer-attached base material of the present invention.

## DESCRIPTION OF THE PREFERRED EMBODIMENTS

Hereinafter, an antibacterial layer-attached base material and a film for a display of the present invention will

be described.

In the present specification, the numerical range represented by "to" means a range including numerical values denoted before and after "to" as a lower limit value and an upper limit value.

As a characteristic of the present invention, antibacterial agent fine particles of which the average particle diameter is 0.20 to 1 μm are contained in an antibacterial layer. Accordingly, moderate unevenness is formed on the surface of the antibacterial layer. Therefore, satisfactory anti-glare characteristics can be obtained even in a case where a base material having optical anisotropy is used.

In addition, as another characteristic of the present invention, the thickness of the antibacterial layer is set to be greater than 5 μm. In a case where the thickness of the antibacterial layer is small, in some cases, rainbow unevenness easily occurs. However, the occurrence of the rainbow unevenness is suppressed by setting the thickness of the antibacterial layer to be greater than 5 μm.

warping easily occurs in the antibacterial layer-attached base material. Therefore, as still another characteristic of the present invention, the tensile strength of the base material is set to be greater than or equal to 200 MPa. Accordingly, it is possible to suppress the warping of the antibacterial layer-attached base material.

[Antibacterial Layer-Attached Base Material]

Fig. 1 is a cross-sectional view of an embodiment of the antibacterial layer-attached base material of the present invention. As shown in Fig. 1, an antibacterial layer-attached base material 10 has a base material 12 and an antibacterial layer 14 which is disposed on the base material 12. The antibacterial layer 14 may be disposed on at least a part of the surface of the base material 12.

Hereinafter, each member will be described in detail.

<Base Material>

The base material is a member playing a role of supporting an antibacterial layer. In the present invention, a base material having optical anisotropy is used.

In the present invention, the expression that a base material "has optical anisotropy" means that an in-plane retardation value Re (590) of the base material which has been measured at a wavelength of 590 nm is greater than or equal to 1,500 nm in a case where the thickness of the base material is 100 μm. The upper limit of Re (590) of the base material is not particularly limited, but is, for example, less than or equal to 30,000 nm.

Re ($\lambda$) represents in-plane retardation at a wavelength $\lambda$. Re ($\lambda$) is measured by allowing light at a wavelength of $\lambda$ nm to be incident in a normal direction of the base material in KOBRA 21ADH or WR (manufactured by Oji Scientific Instruments). In a case of selecting a measurement wavelength $\lambda$ nm, it is possible to perform the measurement after manually exchanging a wavelength selective filter or converting the measurement value using a program or the like.

More specifically, it is possible to employ, for example, a measurement method disclosed in paragraphs [0043] to [0046] of JP2014-215360A as the measurement method of retardation.

The material constituting the base material is not particularly limited as long as it is possible to produce a base material having optical anisotropy, but examples thereof include polycarbonate polymers; polyester polymers such as polyethylene terephthalate (PET) and polyethylene naphthalate; acrylic polymers such as polymethyl methacrylate; styrene polymers such as polystyrene and an acrylonitrile-styrene copolymer (AS resin); polyolefin polymers such as polyethylene, polypropylene and ethylene-propylene copolymer; vinyl chloride polymers; amide polymers such as nylon and aromatic polyamide; imide polymers; sulfone polymers; polyether sulfone polymers; polyether ether ketone polymers; polyphenylene sulfide polymers; vinylidene chloride polymers; vinyl alcohol polymers; vinyl butyral polymers; arylate polymers; polyoxymethylene polymers; epoxy polymers; and polymers obtained by mixing the above-described polymers with each other.

Among them, polyester polymers such as polyethylene terephthalate (PET) are preferable.

<Tensile Strength>

The tensile strength of the base material is greater than or equal to 200 MPa. In a case where the antibacterial layer is too thick, in some cases, warping occurs in the antibacterial layer-attached base material. However, the occurrence of the warping is suppressed by setting the tensile strength of the base material to be greater than or equal to 200 MPa. The tensile strength of the base material is preferably greater than or equal to 220 MPa for the reason that the occurrence of the warping is further suppressed.

On the other hand, the upper limit of the tensile strength of the base material is not particularly limited.

In the present invention, the tensile strength of the base material refers to a tensile strength measured in accordance with ASTM-D-882-61T.

The shape of the base material is not particularly limited, and examples thereof include a plate shape, a film shape, and a sheet shape. In addition, the surface of the base material on which an antibacterial layer to be described below is disposed may be a flat surface, a concave surface, or a convex surface.

An easily adhesive layer which is well-known in the related art may be formed on the surface of the base material on which the antibacterial layer is disposed.

In addition, the thickness of the base material is not particularly limited as long as the above-described tensile strength is satisfied, and is, for example, 50 to 300 μm and preferably 75 to 150 μm.

[Antibacterial Layer]

The antibacterial layer is a layer which is disposed on at least a part of the surface of a base material, exhibits an antibacterial action, and contains antibacterial agent fine particles and a binder.

<Antibacterial Agent Fine Particles>

The antibacterial agent fine particles are not particularly limited, and a favorable example thereof includes a silver-supporting carrier which has a carrier and silver supported on the carrier.

(Silver)

The type of silver (silver atom) contained in antibacterial agent fine particles is not particularly limited. In addition, the form of silver is also not particularly limited. For example, silver is contained in a form of metal silver, silver ions, silver salts (containing silver complexes), or the like. In the present specification, the silver complexes are included in a range of silver salts.

Examples of the silver salts include silver acetate, silver acetylacetonate, silver azide, silver acetylide, silver arsenite, silver benzoate, silver hydrogen fluoride, silver bromate, silver bromide, silver carbonate, silver chloride, silver chlorate, silver chromate, silver citrate, silver cyanate, silver cyanide, silver (cis,cis-1,5-cyclooctadiene)-1,1,1,5,5,5-hexafluoroacetylacetonate, silver diethyldithiocarbamate, silver (I) fluoride, silver (II) fluoride, silver 7,7-dimethyl-1,1,1,2,2,3,3-heptafluoro-4,6-octanedionate, silver hexafluoroantimonate, silver hexafluoroarsenate, silver hexafluorophosphate, silver iodate, silver iodide, silver isothiocyanate, silver potassium cyanide, silver lactate, silver molybdate, silver nitrate, silver nitrite, silver (I) oxide, silver (II) oxide, silver oxalate, silver perchlorate, silver perfluorobutyrate, silver perfluoropropionate, silver permanganate, silver perrhenate, silver phosphate, silver picrate monohydrate, silver propionate, silver selenate, silver selenide, silver selenite, silver sulfadiazine, silver sulfate, silver sulfide, silver sulfite, silver telluride, silver tetrafluoroborate, silver tetraiodine curate, silver tetratungstate, silver thiocyanate, silver p-toluene sulfonate, silver trifluoromethanesulfonate, silver trifluoroacetate, and silver vanadate.

Examples of the silver complexes include a histidine silver complex, a methionine silver complex, a cysteine silver complex, a silver aspartate complex, a silver pyrrolidone carboxylate complex, a silver oxotetrahydrofuran carboxylate complex, and an imidazole silver complex.

(Carrier)

The type of carrier is not particularly limited, and examples thereof include zinc calcium phosphate, calcium phosphate, zirconium phosphate, aluminum phosphate, calcium silicate, activated carbon, activated alumina, silica gel, zeolite, hydroxyapatite, titanium silicate, activated carbon, activated alumina, silica gel, zeolite, hydroxyapatite, titanium phosphate, potassium titanate, hydrous bismuth oxide, hydrous zirconium oxide, and hydrotalcite.

(Average Particle Diameter)

The average particle diameter of antibacterial agent fine particles is 0.20 to 1 μm. Accordingly, moderate unevenness is formed on the surface of the antibacterial layer and satisfactory anti-glare characteristics can be obtained. In addition, it is also possible to suppress occurrence of flickering.

The average particle diameter of the antibacterial agent fine particles is greater than or equal to 0.20 μm for the reason that more satisfactory anti-glare characteristics can be obtained.

In addition, the average particle diameter of the antibacterial agent fine particles is preferably less than or equal to 0.70 μm and more preferably less than or equal to 0.65 μm for the reason that it is possible to further suppress the occurrence of flickering.

An average value of values, which are obtained by measuring 50% volume cumulative diameter (D50) three times using a laser diffraction/scattering type particle size distribution measuring device manufactured by HORIBA, Ltd.,

is used as the above-described average particle diameter.

An example of a preferred embodiment of an antibacterial agent fine particle includes an antibacterial agent fine particle having: silver and any one carrier selected from the group consisting of zinc calcium phosphate and calcium phosphate for the reason that the effect of the present invention is more excellent. In other words, the antibacterial agent fine particle is preferably a silver-supporting carrier having any one carrier selected from the group consisting of zinc calcium phosphate and calcium phosphate and silver supported on the carrier.

It is possible to use a commercially available product as such an antibacterial agent fine particle (silver-supporting carrier). Specifically, a favorable example thereof includes silver ceramic particle dispersion liquid (manufactured by Fuji Chemical Industries, Ltd.).

The content of silver in antibacterial agent fine particles is not particularly limited. For example, in a case where the antibacterial agent fine particles are silver-supporting carriers, the content of silver is preferably 0.1 to 30 mass% and more preferably 0.3 to 10 mass% with respect to the total mass of the silver-supporting carriers.

The content of the antibacterial agent fine particles in an antibacterial layer is not particularly limited. However, it is preferable that the antibacterial agent fine particles are of the antibacterial layer becomes 0.0001 to 1 mass% (preferably 0.001 to 0.1 mass%) for the reason that the effect of the present invention is more excellent.

The amount of silver in the antibacterial layer means the total amount of silver in the antibacterial agent fine particles.

In addition, the content of the antibacterial agent fine particles in the antibacterial layer with respect to the total mass of the antibacterial layer is preferably greater than or equal to 2.0 mass% and more preferably greater than or equal to 4.0 mass% from the viewpoints of antibacterial properties and anti-glare characteristics. On the other hand, the upper limit of the content of the antibacterial agent fine particles in the antibacterial layer is not particularly limited, but is preferably less than or equal to 25 mass% and more preferably less than or equal to 20 mass%, with respect to the total mass of the antibacterial layer.

It is considered that, in some cases, it is difficult to directly obtain the content of the antibacterial agent fine particles in the antibacterial layer. In this case, it is possible to assume that the solid content of a composition (for example, curable composition to be described below) used for forming the antibacterial layer is the total mass of the antibacterial layer.

<Binder>

The antibacterial layer further contains a binder in addition to the above-described antibacterial agent fine particles.

(Hydrophilic Polymer)

Favorable Examples of the binder contained in the antibacterial layer include a polymer having a hydrophilic group (hereinafter, also simply referred to as a "hydrophilic polymer"). By making the antibacterial layer contain the hydrophilic polymer, the antibacterial layer exhibits more hydrophilicity. As a result, the antibacterial properties become satisfactory and it is possible to more easily remove contaminants adhered to the top of the antibacterial layer through cleaning using water or the like.

The reason why the antibacterial properties become satisfactory in a case where the antibacterial layer contains the hydrophilic polymer as a binder (that is, in a case where the antibacterial layer exhibits hydrophilicity) is assumed as follows.

First, in a case where the antibacterial layer exhibits hydrophobicity, it is difficult to supply more silver in a case where the antibacterial agent fine particles on the surface of the antibacterial layer are consumed. Therefore, it becomes difficult to exhibit the antibacterial properties.

In contrast, in a case where the antibacterial layer exhibits hydrophilicity, moisture also permeates into the antibacterial layer. Therefore, moisture reaches also the antibacterial agent fine particles of the inside of a binder, and thus, it is possible to release silver ions. For this reason, it is considered that the antibacterial agent fine particles in the antibacterial layer can be effectively utilized and supply of silver can be continuously performed, and therefore, the antibacterial properties become satisfactory.

The type of hydrophilic group is not particularly limited, and examples thereof include a polyoxyalkylene group (for example, a polyoxyethylene group, a polyoxypropylene group, and a polyoxyalkylene group to which an oxyethylene group and an oxypropylene group are block-bonded or are randomly bonded), an amino group, a carboxyl group, an alkali metal salt of a carboxyl group, a hydroxy group, an alkoxy group, an amide group, a carbamoyl group, a sulfonamide group, a sulfamoyl group, a sulfonic acid group, and an alkali metal salt of a sulfonic acid group. Among them, a polyoxyalkylene group is preferable for the reason that the effect of the present invention is more excellent.

The structure of a main chain of the hydrophilic polymer is not particularly limited, and examples thereof include

polyurethane, poly(meth)acrylate, polystyrene, polyester, polyamide, polyimide, and polyurea.

The poly(meth)acrylate has a concept including both polyacrylate and polymethacrylate.

(Hydrophilic Monomer)

As an example of a suitable aspect of the hydrophilic polymer, there is a polymer obtained by polymerizing a monomer (hereinafter, also simply referred to as a "hydrophilic monomer") which has the above-described hydrophilic group.

The hydrophilic monomer means a compound (monomer and/or oligomer) having the above-described hydrophilic group and a polymerizable group. The definition of the hydrophilic group is as described above.

The number of hydrophilic groups in a hydrophilic monomer is not particularly limited, but is preferably greater than or equal to two, more preferably two to six, and still more preferably two to three from the viewpoint that an antibacterial layer exhibits more hydrophilicity.

The type of polymerizable group in the hydrophilic monomer is not particularly limited, and examples thereof include a radical polymerizable group, a cationic polymerizable group, and anionic polymerizable group. Examples of the radical polymerizable group include a (meth)acryloyl group, an acrylamide group, a vinyl group, a styryl group, and an allyl group. Examples of the cationic polymerizable group include a vinyl ether group, an oxiranyl group, and an oxetanyl group. Among these, a (meth)acryloyl group is preferable.

The (meth)acryloyl group has a concept including both acryloyl group and a methacryloyl group.

The number of polymerizable groups in a hydrophilic monomer is not particularly limited, but is preferably greater than or equal to two, more preferably two to six, and still more preferably two or three for the reason that the mechanical strength of an antibacterial layer which can be obtained is more excellent.

As an example of a suitable aspect of the hydrophilic monomer, there is a compound represented by Formula (A).

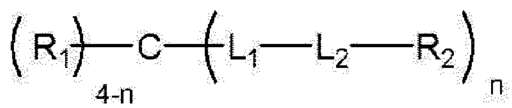

Formula (A)

In Formula (A), $R_1$ represents a substituent (monovalent substituent). The type of substituent is not particularly limited, and examples thereof include a well-known substituent. For example, there is a hydrocarbon group (for example, an alkyl group or aryl group) which may have a hetero atom or the above-described hydrophilic group.

$R_2$ represents a polymerizable group. The definition of the polymerizable group is as described above.

$L_1$ represents a single bond or a divalent linking group. The type of divalent linking group is not particularly limited, and examples thereof include -O-, -CO-, -NH-, -CO-NH-, -COO-, -O-COO-, an alkylene group, an arylene group, a heteroaryl group, and a combination thereof.

$L_2$ represents a polyoxyalkylene group. The polyoxyalkylene group means a group represented by Formula (B).

Formula (B) $* - (OR_3)_m - *$

In Formula (B), $R_3$ represents an alkylene group (for example, an ethylene group and a propylene group), m represents an integer of 2 or more, preferably 2 to 10, and more preferably 2 to 6. * represents a bonding position.

n represents an integer of 1 to 4.

It is possible to use a commercially available product as the hydrophilic monomer having the above-described hydrophilic group and polymerizable group. Specifically, favorable examples thereof include Miramer M4004 (manufactured by Toyo Chemicals Co., Ltd.) and Miramer M3150 (manufactured by Toyo Chemicals Co., Ltd.).

In addition, a commercially available product of a coating agent containing a hydrophilic monomer may be used. Specifically, favorable examples thereof include AITRON Z-949-1HL (manufactured by Aika Kogyo Co., Ltd.).

(Other Monomers)

In a case of obtaining a hydrophilic polymer, the above-described hydrophilic monomer and another monomer (a monomer containing no hydrophilic group) may be used together. That is, a hydrophilic polymer which can be obtained by copolymerizing the hydrophilic monomer and the other monomer (a monomer other than the hydrophilic monomer) may be used.

The type of the other monomer is not particularly limited, and any well-known monomers having a polymerizable

group can be appropriately used. The definition of the polymerizable group is as described above.

Among them, a polyfunctional monomer having two or more polymerizable groups is preferable for the reason that the mechanical strength of the antibacterial layer is more excellent. The polyfunctional monomer acts as a so-called crosslinking agent.

The number of polymerizable groups contained in a polyfunctional monomer is not particularly limited, but is preferably two to ten and more preferably two to six from the viewpoint of more excellent the mechanical strength of an antibacterial layer and handleability.

Examples of the polyfunctional monomer include trimethylolpropane triacrylate, tetramethylolmethane tetraacrylate, dipentaerythritol hexaacrylate, and pentaerythritol tetraacrylate.

It is possible to use a commercially available product as such a polyfunctional monomer (crosslinking agent), and a specific example of dipentaerythritol hexaacrylate include A-DPH (manufactured by SHIN-NAKAMURA CHEMICAL CO., LTD.).

The mixing ratio (mass of a hydrophilic monomer / mass of another monomer) of a hydrophilic monomer and another monomer (particularly, a polyfunctional monomer) is not particularly limited, but is preferably 0.01 to 10 and more preferably 0.1 to 10 from the viewpoint of easy controlling of hydrophilicity of an antibacterial layer.

The content of a binder in an antibacterial layer is not particularly limited. However, in a case where the binder is the above-described hydrophilic polymer, the content of a binder in an antibacterial layer is preferably greater than or equal to 50 mass%, more preferably greater than or equal to 70 mass%, and still more preferably greater than or equal to 90 mass% with respect to the total mass of the antibacterial layer for the reason that removing properties of contaminants in a case of cleaning of the contaminants on the antibacterial layer are more excellent.

<Other Components>

Components (other components) other than the above-described antibacterial agent fine particles and binder may be contained in the antibacterial layer. Examples of the other components include components contained in a composition to be described below which are used in a case of producing an antibacterial layer and components derived from these components.

<Thickness of Antibacterial Layer>

The thickness of the antibacterial layer is greater than 5 μm. In some cases, rainbow unevenness easily occurs in an antibacterial layer-attached base material in a case where the thickness of the antibacterial layer is small. However, the occurrence of rainbow unevenness is suppressed by setting the thickness of the antibacterial layer to be greater than 5 μm. The thickness of the antibacterial layer is preferably greater than or equal to 6.5 μm and more preferably greater than or equal to 8 μm for the reason that such characteristics are more excellent.

On the other hand, the upper limit of the thickness of the antibacterial layer is smaller than or equal to 15 μm and preferably smaller than or equal to 13 μm. The upper limit of the thickness of the antibacterial layer is more preferably smaller than or equal to 11 μm for the reason that anti-glare characteristics are more excellent.

In the present invention, the thickness of the antibacterial layer can be obtained as follow. First, a sample piece of the antibacterial layer is embedded in a resin, and then, a cross section is cut using a microtome. Thereafter, the cut cross section is observed using a scanning electron microscope. The thicknesses of the antibacterial layer at arbitrary 10 positions are measured. A numerical value obtained by arithmetically averaging the measurement results is set as a thickness of the antibacterial layer.

<Water Contact Angle of Antibacterial Layer>

The water contact angle of the surface of an antibacterial layer is not particularly limited, but is preferably less than or equal to 80° and more preferably less than or equal to 60°, for the reasons that removing properties of contaminants on the antibacterial layer in a case of cleaning or the like are more excellent and antibacterial properties are more excellent. The lower limit thereof is not particularly limited, but there are many cases where the water contact angle is greater than or equal to 5° from the viewpoint of characteristics of materials to be used.

In the present specification, the water contact angle is measured based on a sessile drop method of JIS R 3257:1999. FAMMS DM-701 manufactured by Kyowa Interface Science Co., Ltd. is used for the measurement. More specifically, 2 μL of liquid droplets of pure water is added dropwise to the surface of an antibacterial layer under the condition of a room temperature of 20°C while keeping a horizontal posture. The contact angle at a point in time at which 20 seconds has elapsed after the dropwise addition is measured at 10 positions. An average value of the measurement results is set as a contact angle.

[Method for Producing Antibacterial Layer-Attached Base Material]

The method for producing an antibacterial layer-attached base material is not particularly limited, and a well-known method can be employed. Examples thereof include a method for forming an antibacterial layer by coating the top of a base material with a composition containing the above-described antibacterial agent fine particles and binder, or a method for pasting an antibacterial sheet (antibacterial layer) containing antibacterial agent fine particles and a binder which have been separately prepared to the base material at a predetermined position.
Among them, a favorable example of the method includes a method (coating method) for forming an coating film by coating the top of a base material with a composition (curable composition) containing the above-described antibacterial agent fine particles and hydrophilic monomer at a predetermined position and subjecting the coating film to a curing treatment to form an antibacterial layer, from the viewpoint of easier adjustment of the thickness of the antibacterial layer and/or surface unevenness.
Other components may be further contained in the composition (curable composition). Examples of the other components include a lubricant, a dispersing agent, and a solvent in addition to the above-described other monomers.
The dispersing agent is not particularly limited, and any well-known dispersing agent in the related art can be used. Specific examples of the commercially available product of the dispersing agent include DISPERBYK (registered trademark) -102, -110, -111, -112, and -180 (all are manufactured by BYK Japan KK.), Solsperse (registered trademark) 26000, 36000, and 41000 (all are manufactured by Lubrizol).
The dispersing agents may be used alone, or two or more kinds thereof may be used in combination.
Examples of the solvent include water or an organic solvent. Any well-known organic solvent in the related art can be appropriately used as the organic solvent. Examples of the organic solvent include alcoholic solvents such as methyl alcohol, ethyl alcohol, n-propyl alcohol, isopropyl alcohol, n-butyl alcohol, sec-butyl alcohol, tert-butyl alcohol, isobutyl alcohol, n-hexyl alcohol, n-heptyl alcohol, n-octyl alcohol, and n-decanol; glycol solvents such as ethylene glycol, diethylene glycol, and triethylene glycol; and glycol ether solvents such as ethylene glycol monomethyl ether, propylene glycol monomethyl ether (1-methoxy-2-propanol), ethylene glycol monoethyl ether, propylene glycol monoethyl ether, diethylene glycol mono methyl ether, triethylene glycol monoethyl ether, and methoxy methyl butanol, but the present invention is not limited thereto.
The composition may contain a polymerization initiator. By making the composition contain a polymerization initiator, polymerization more efficiently progresses in a coating film, thereby forming an antibacterial layer excellent in the mechanical strength. The type of polymerization initiator is not particularly limited, and an optimum kind of polymerization initiator is selected through the curing treatment method. For example, a thermopolymerization initiator or a photopolymerization initiator is selected.
More specific examples thereof include aromatic ketones such as benzophenone and phenylphosphine oxide; and $\alpha$-hydroxyalkylphenone-based compounds (BASF IRGACURE (registered trademark) 184, 127, and 2959, and DAROCUR (registered trademark) 1173, and the like).
In a case where a polymerization initiator is contained in a coating agent containing a hydrophilic monomer, the polymerization initiator may be used.
The content of the polymerization initiator contained in a composition is not particularly limited, but is preferably 0.1 to 15 parts by mass and more preferably 1 to 6 parts by mass with respect to 100 parts by mass of the total mass of the hydrophilic monomer and the other monomer.
The method for coating a base material with a composition is not particularly limited, and a well-known coating method is employed.
In addition, the curing treatment method is not particularly limited, and examples thereof include a heating treatment or a light irradiation treatment. An example of the light irradiation treatment includes an ultraviolet irradiation treatment.

[Application of Antibacterial Layer-Attached Base Material]

The antibacterial layer-attached base material of the present invention can be applied to various applications and can be disposed on various devices (particularly, the surface of a device). That is, the antibacterial layer-attached base material of the present invention can be used as a front plate of each device.
Meanwhile, a mobile terminal (for example, a smart phone and a tablet terminal) in which a touch panel is provided on a display has a transparent member (for example, cover glass) for protecting the touch panel. However, in some cases, a retrofitted film for a display is pasted on the surface of this transparent member in order to achieve various purposes (for example, for protecting the transparent member).
The antibacterial layer-attached base material of the present invention can be favorably used as such a film for a display. In this case, even in a situation where a finger or the like frequently comes into contact with the film for a display in a case of operating a touch panel or the like, it is possible to exhibit satisfactory antibacterial properties, using

the antibacterial layer-attached base material of the present invention as the film. In addition, in a case where the antibacterial layer-attached base material of the present invention is used, satisfactory anti-glare characteristics are exhibited and rainbow unevenness and flickering are suppressed, and therefore, visibility also becomes satisfactory. Furthermore, warping of the antibacterial layer-attached base material of the present invention is suppressed. Therefore, workability in a case where a purchaser or the like of a mobile terminal pastes the film for a display to the mobile terminal also becomes satisfactory.

[Film for Display]

The film for a display of the present invention is a film for a display in which the antibacterial layer-attached base material of the present invention is used. The film for a display of the present invention has, for example, the antibacterial layer-attached base material of the present invention and a pressure sensitive adhesive layer (fine pressure sensitive adhesive layer) which is disposed on the surface of the antibacterial layer-attached base material of the present invention on a side opposite to the antibacterial layer side. As described above, it is possible to favorably use the antibacterial layer-attached base material of the present invention as the film for a display.

An example of the method for producing the film for a display of the present invention which is a laminate includes a method for forming a pressure sensitive adhesive layer (fine pressure sensitive adhesive layer) by coating the top of the surface of the antibacterial layer-attached base material of the present invention on a side opposite to the antibacterial layer side with a well-known pressure sensitive adhesive.

It is possible to paste a peeling film on the surface of the base material on the antibacterial layer side in order to prevent contamination.

The film for a display of the present invention can be pasted on the surface of a transparent member of a mobile terminal, for example, through the pressure sensitive adhesive layer (fine pressure sensitive adhesive layer).

[Examples]

Hereinafter, the present invention will be further described in detail using Examples, but is not limited thereto.

<Example 1>

(Preparation of Curable Composition 1)

A curable composition 1 for forming an antibacterial layer was prepared by mixing components shown below.

- Hydrophilic monomer: Miramer M4004 (manufactured by Toyo Chemicals Co., Ltd.) 44 parts by mass
- Hydrophilic monomer: Miramer M3150 (manufactured by Toyo Chemicals Co., Ltd.) 44 parts by mass
- Crosslinking agent: A-DPH (manufactured by SHIN-NAKAMURA CHEMICAL CO., LTD.) 29 parts by mass
- Polymerization initiator: IRGACURE (registered trademark) 184 (manufactured by BASF SE) 3 parts by mass
- Antibacterial agent fine particles: silver ceramic particle dispersion liquid (manufactured by Fuji Chemical Industries, Ltd.) 40 parts by mass
  (Carrier: zinc calcium phosphate, average particle diameter of 0.55 μm, concentration of 25 mass%)
- Solvent: 1-methoxy-2-propanol 90 parts by mass

(Production of Sample for Evaluation)

The surface of a PET base material (a thickness of 100 μm, a tensile strength of 230 MPa, and an in-plane retardation value of about 1900 which had been measured at a wavelength of 590 nm) having an easily adhesive layer on its surface was coated with the curable composition 1 which had been prepared. Then, a monomer was cured through UV irradiation to form an antibacterial layer. At this time, the thickness of the antibacterial layer was set to be 10 μm by adjusting the coating amount of the curable composition 1.

Next, a fine pressure sensitive adhesive layer was formed by coating the rear surface of the PET base material with a silicone pressure sensitive adhesive. A sample for evaluation was produced in this manner.

The formed fine pressure sensitive adhesive layer had a specification that air bubbles hardly enter the space between the fine pressure sensitive adhesive layer and the surface of glass or the like even in a case of pasting the fine pressure sensitive adhesive layer to the surface of the glass. Therefore, the produced sample for evaluation was favorably used to be pasted on the surface of cover glass of a touch panel as a film for a display.

<Example 2>

(Preparation of Curable Composition 2)

A curable composition 2 for forming an antibacterial layer was prepared by mixing components shown below.

- Hydrophilic monomer: AITRON Z-949-1HL 208 parts by mass
  (manufactured by Aika Kogyo Co., Ltd., concentration of 58 mass%)
- Antibacterial agent fine particles: silver ceramic particle dispersion liquid (manufactured by Fuji Chemical Industries, Ltd.) 40.3 parts by mass
  (Carrier: zinc calcium phosphate, average particle diameter of 0.55 μm, concentration of 25 mass%)
- Dispersing agent: DISPERBYK (registered trademark) -180 0.65 parts by mass
  (manufactured by BYK Japan KK.)
- Solvent: 1-methoxy-2-propanol 0.65 parts by mass

(Production of Sample for Evaluation)

A sample for evaluation was produced in accordance with the same procedure as in Example 1 except that the curable composition 2 was used.

<Example 3>

A sample for evaluation was produced in accordance with the same procedure as in Example 2 except that the tensile strength of a PET base material was changed to 200 MPa.

<Example 4>

A sample for evaluation was produced in accordance with the same procedure as in Example 2 except that the tensile strength of a PET base material was changed to 260 MPa.

<Example 5>

A sample for evaluation was produced in accordance with the same procedure as in Example 2 except that the tensile strength of a PET base material was changed to 280 MPa.

<Example 6>

(Preparation of Curable Composition 3)

A curable composition 3 for forming an antibacterial layer was prepared by mixing components shown below.

- Hydrophilic monomer: AITRON Z-949-1HL 224 parts by mass
  (manufactured by Aika Kogyo Co., Ltd., concentration of 58 mass%)
- Antibacterial agent fine particles: silver ceramic particle dispersion liquid (manufactured by Fuji Chemical Industries, Ltd.) 25.2 parts by mass
  (Carrier: zinc calcium phosphate, average particle diameter of 0.55 μm, concentration of 25 mass%)
- Dispersing agent: DISPERBYK (registered trademark) -180 0.41 parts by mass
  (manufactured by BYK Japan KK.)
- Solvent: 1-methoxy-2-propanol 0.41 parts by mass

(Production of Sample for Evaluation)

A sample for evaluation was produced in accordance with the same procedure as in Example 2 except that the curable composition 3 was used and the thickness of the antibacterial layer was set to be 12 μm.

<Example 7>

A sample for evaluation was produced in accordance with the same procedure as in Example 6 except that

the thickness of an antibacterial layer was set to be 10 μm.

<Example 8>

(Preparation of Curable Composition 4)

A curable composition 4 for forming an antibacterial layer was prepared by mixing components shown below.

- Hydrophilic monomer: AITRON Z-949-1HL 198 parts by mass
(manufactured by Aika Kogyo Co., Ltd., concentration of 58 mass%)
- Antibacterial agent fine particles: silver ceramic particle dispersion liquid (manufactured by Fuji Chemical Industries, Ltd.) 50.4 parts by mass
(Carrier: zinc calcium phosphate, average particle diameter of 0.55 μm, concentration of 25 mass%)
- Dispersing agent: DISPERBYK (registered trademark) -180 0.81 parts by mass
(manufactured by BYK Japan KK.)
- Solvent: 1-methoxy-2-propanol 0.81 parts by mass

(Production of Sample for Evaluation)

A sample for evaluation was produced in accordance with the same procedure as in Example 2 except that the curable composition 4 was used.

<Example 9>

A sample for evaluation was produced in accordance with the same procedure as in Example 8 except that the average particle diameter of the silver ceramic particle dispersion liquid was changed to 0.2 μm.

<Comparative Example 1>

A sample for evaluation was produced in accordance with the same procedure as in Example 2 except that the tensile strength of a PET base material was changed to 180 MPa.

<Comparative Example 2>

Comparative Example 2 is an example in which a "suspension 1" and a "test piece 1" disclosed in [Examples] of JP1995-291814A (JP-H07-291814A) are referred to.
First, a curable composition X1 for forming an antibacterial layer was prepared by mixing components shown below.

- Polymethyl methacrylate (PMMA) resin (manufactured by Sumitomo Chemical Co., Ltd.) 20 parts by mass
- Toluene 74.5 parts by mass
- Silver-calcium zinc phosphate suspension 5.5 parts by mass

(average particle diameter of 2.7 μm, concentration of 25 mass%)

Next, a sample for evaluation was produced. At this time, the sample for evaluation was produced in accordance with the same procedure as in Example 2 except that the curable composition X1 was used and the thickness of an antibacterial layer was set to be 3 μm.

<Comparative Example 3>

Comparative Example 3 is an example in which a "suspension 3" and a "test piece 3" disclosed in JPI995-291814A(JP-H07-291814A) are referred to.
A sample for evaluation was produced in accordance with the same procedure as in Comparative Example 2 except that the average particle diameter of the silver-calcium zinc phosphate contained in a suspension was changed to 0.15 μm.

<Comparative Example 4>

Comparative Example 4 is an example in which a "suspension 2" and a "test piece 2" disclosed in JP1995-291814A(JP-H07-291814A) are referred to.
First, a curable composition X2 for forming an antibacterial layer was prepared by mixing components shown below.

- Polymethyl methacrylate (PMMA) resin (manufactured by Sumitomo Chemical Co., Ltd.) 20 parts by mass
- Toluene 74.5 parts by mass
- Silver-zeolite suspension 5.5 parts by mass
  (average particle diameter of 3.1 μm, concentration of 25 mass%)

Next, a sample for evaluation was produced. At this time, the sample for evaluation was produced in accordance with the same procedure as in Comparative Example 2 except that the curable composition X2 was used.

<Comparative Example 5>

Comparative Example 5 is an example in which a "suspension 4" and a "test piece 4" disclosed in JP1995-291814A (JP-H07-291814A) are referred to.
A sample for evaluation was produced in accordance with the same procedure as in Comparative Example 4 except that the average particle diameter of the silver-zeolite contained in a suspension was changed to 0.25 μm.

<Comparative Example 6>

Comparative Example 6 is an example in which a "suspension 5" and a "test piece 5" disclosed in JP1995-291814A (JP-H07-291814A) are referred to.
First, a curable composition X3 for forming an antibacterial layer was prepared by mixing components shown below.

- Polymethyl methacrylate (PMMA) resin (manufactured by Sumitomo Chemical Co., Ltd.) 20 parts by mass
- Toluene 74.5 parts by mass
- Silver-zirconium phosphate suspension 5.5 parts by mass
  (average particle diameter of 0.72 μm, concentration of 25 mass%)

Next, a sample for evaluation was produced. At this time, the sample for evaluation was produced in accordance with the same procedure as in Comparative Example 2 except that the curable composition X3 was used.

<Comparative Example 7>

Comparative Example 7 is an example in which a "suspension 6" and a "test piece 6" disclosed in JP1995-291814A(JP-H07-291814A) are referred to.
A sample for evaluation was produced in accordance with the same procedure as in Comparative Example 6 except that the average particle diameter of the silver-zirconium phosphate contained in a suspension was changed to 0.22 μm.

<Hydrophilicity or Hydrophobicity>

The water contact angle of an antibacterial layer of each of the samples for evaluation obtained in Examples 1 to 9 and Comparative Examples 1 to 7 was measured through the above-described method. In a case where the water contact angle is less than or equal to 80°, "hydrophilicity" is denoted in Table 1. In a case where the water contact angle is greater than 80°, "hydrophobicity" is denoted in Table 1.

<Evaluation>

The following evaluation was performed using the samples for evaluation obtained in Examples 1 to 9 and Comparative Examples 1 to 7. The results are summarized in Table 1.

(Antibacterial Properties)

Escherichia coli was used as a bacterial species and a test was performed regarding each time range in which the time for which an antibacterial layer came into contact with Escherichia coli was within 24 hours in accordance with JIS Z 2801 : 2010. The time until the number of viable bacteria becomes less than or equal to a detection limit was measured. The evaluation was performed in accordance with the following criteria. Practically, "A" to "C" are preferable.

"A": shorter than or equal to 30 minutes
"B": longer than 30 minutes and shorter than or equal to 60 minutes
"C": longer than 60 minutes and shorter than or equal to 2 hours
"D": longer than 2 hours and shorter than or equal to 3 hours
"E": longer than 3 hours

(Anti-Glare Characteristics)

A fluorescent lamp which was installed at a height of 2.5 m was flashed on a sample for evaluation and evaluation of blurring of the outline of the fluorescent lamp was performed in accordance with the following criteria. Practically, it is possible to evaluate that the anti-glare characteristics are excellent in cases of "A" to "C".

"A": It is clearly blurred.
"B": It is blurred.
"C": It is slightly blurred.
"D": The outline of the fluorescent lamp is clear.

(Flickering)

A sample for evaluation was pasted to cover glass of a tablet terminal (iPad (Air, registered trademark) manufactured by Apple Inc.) and the brightness of a display was set to be maximum. Then, flickering was visually checked. The flickering of a screen was evaluated in accordance with the following criteria. Practically, it is possible to evaluate that the flickering is prevented in cases of "A" and "B".

"A": There is no flickering.
"B": There is slight flickering.
"C": There is clearly flickering.

(Rainbow Unevenness)

A sample for evaluation was pasted to cover glass of a tablet terminal (iPad (Air, registered trademark) manufactured by Apple Inc.) and display of a display was set to be turned off. Then, rainbow unevenness was visually checked. The rainbow unevenness was evaluated in accordance with the following criteria. Practically, it is possible to evaluate that the rainbow unevenness is suppressed in cases of "A" and "B".

"A": There is no rainbow unevenness.
"B": Rainbow unevenness is slightly visible.
"C": Rainbow unevenness is clearly visible.

(Warping)

A sample for evaluation before being pasted to a tablet terminal was placed on a horizontalized laboratory table in a state where an antibacterial layer side was kept upward, and lifting of an end portion was measured using a ruler. Practically, it is possible to evaluate that the warping is suppressed in cases of "A" to "C".

"A": 0 mm
"B": greater than 0 mm and less than 3 mm
"C": greater than or equal to 3 mm and less than 5 mm
"D": greater than or equal to 5 mm

The content (unit: mass%) of antibacterial agent fine particles (silver-supporting carrier) with respect to the total

mass of a formed antibacterial layer is denoted in the column of "Content" of "Antibacterial agent fine particles" in Table 1.

In addition, a polymerizable group of a monomer used in a case of polymerization of each binder (polymer) is denoted in the column of "Polymerizable group" of "Binder" in Table 1. Furthermore, it is denoted in the column of "Hydrophilicity or hydrophobicity" whether each binder (polymer) is "hydrophilic" or "hydrophobic". Whether each binder is "hydrophilic" or "hydrophobic" is determined from the monomer which has been used.

Measurement methods of "Average particle diameter" of "Antibacterial agent fine particles", "Thickness" of "Antibacterial layer", and "Tensile strength" of "Base material" in Table 1 are as described above.

[Table 1]

| | | Antibacterial layer | | | | | | Base material | Evaluation | | | | |
|---|---|---|---|---|---|---|---|---|---|---|---|---|---|
| | | Antibacterial agent fine particles | | | Binder | | | | | | | | |
| | | Carrier | Content [mass%] | Average particle diameter [μm] | Type | Thickness [μm] | Hydrophilicity or Hydrophobicity | Tensile strength [MPa] | Antibacterial properties | Anti-glare characteristics | Flickering | Rainbow unevenness | Warping |
| Example | 1 | Zinc calcium phosphate | 7.7 | 0.55 | Polymer of monomer containing (meth)acryloyl group | 10 | Hydrophilic | 230 | A | B | B | A | B |
| | 2 | Zinc calcium phosphate | 7.7 | 0.55 | Polymer of monomer containing (meth)acryloyl group | 10 | Hydrophilic | 230 | A | B | B | A | B |
| | 3 | Zinc calcium phosphate | 7.7 | 0.55 | Polymer of monomer containing (meth)acryloyl group | 10 | Hydrophilic | 200 | A | B | B | A | C |
| | 4 | Zinc calcium phosphate | 7.7 | 0.55 | Polymer of monomer containing (meth)acryloyl group | 10 | Hydrophilic | 260 | A | B | B | A | A |
| | 5 | Zinc calcium phosphate | 7.7 | 0.55 | Polymer of monomer containing (meth)acryloyl group | 10 | Hydrophilic | 280 | A | B | B | A | A |

(continued)

| | | Antibacterial layer | | | | | | Base material | Evaluation | | | | |
|---|---|---|---|---|---|---|---|---|---|---|---|---|---|
| | | Antibacterial agent fine particles | | | Binder | | | | | | | | |
| | | Carrier | Content [mass%] | Average particle diameter [μm] | Type | Thickness [μm] | Hydrophilicity or Hydrophobicity | Tensile strength [MPa] | Antibacterial properties | Anti-glare characteristics | Flickering | Rainbow unevenness | Warping |
| | 6 | Zinc calcium phosphate | 4.6 | 0.55 | Polymer of monomer containing (meth)acryloyl group | 12 | Hydrophilic | 230 | A | C | A | A | B |
| | 7 | Zinc calcium phosphate | 4.6 | 0.55 | Polymer of monomer containing (meth)acryloyl group | 10 | Hydrophilic | 230 | A | B | B | A | B |
| | 8 | Zinc calcium phosphate | 9.8 | 0.55 | Polymer of monomer containing (meth)acryloyl group | 10 | Hydrophilic | 230 | A | A | A | A | B |
| | 9 | Zinc calcium phosphate | 9.8 | 0.2 | Polymer of monomer containing (meth)acryloyl group | 10 | Hydrophilic | 230 | A | B | A | A | B |

(continued)

| | | Antibacterial layer | | | | | | Base material | Evaluation | | | | |
|---|---|---|---|---|---|---|---|---|---|---|---|---|---|
| | | Antibacterial agent fine particles | | | Binder | | | | | | | | |
| | | Carrier | Content [mass%] | Average particle diameter [μm] | Type | Thickness [μm] | Hydrophilicity or Hydrophobicity | Tensile strength [MPa] | Antibacterial properties | Anti-glare characteristics | Flickering | Rainbow unevenness | Warping |
| Comparative Example | 1 | Zinc calcium phosphate | 7.7 | 0.55 | Polymer of monomer containing (meth)acryloyl group | 10 | Hydrophilic | 180 | A | B | B | A | D |
| | 2 | Zinc calcium phosphate | 6.4 | 2.7 | PMMA resin | 3 | Hydrophobic | 230 | E | C | C | C | B |
| | 3 | Zinc calcium phosphate | 6.4 | 0.15 | PMMA resin | 3 | Hydrophobic | 230 | E | D | A | C | B |
| | 4 | Zeolite | 6.4 | 3.1 | PMMA resin | 3 | Hydrophobic | 230 | D | C | C | C | B |
| | 5 | Zeolite | 6.4 | 0.25 | PMMA resin | 3 | Hydrophobic | 230 | D | D | A | C | B |
| | 6 | Zirconium phosphate | 6.4 | 0.72 | PMMA resin | 3 | Hydrophobic | 230 | D | C | C | C | B |
| | 7 | Zirconium phosphate | 6.4 | 0.22 | PMMA resin | 3 | Hydrophobic | 230 | D | D | A | C | B |

As shown in Table 1, it was confirmed that, in Examples 1 to 9, antibacterial properties and anti-glare characteristics were excellent and rainbow unevenness and warping were suppressed. In addition, it was found that flickering was also suppressed.

In addition, it was confirmed from comparison results of Examples 2 to 5 that there is a tendency that warping was further suppressed in a case where the tensile strength of a base material increased.

In addition, in a case of comparing Example 6 with Example 7, anti-glare characteristics were more excellent in one (Example 7) with a thinner antibacterial layer and flickering was further suppressed in the other one (Example 6) with a thicker antibacterial layer.

In addition, in a case of comparing Example 2 with Example 8, anti-glare characteristics were more excellent and flickering was further suppressed in one (Example 8) with a large content of antibacterial agent fine particles in an antibacterial layer.

In addition, in a case of comparing Example 8 and Example 9, anti-glare characteristics were more excellent in one (Example 8) with a large average particle diameter of antibacterial agent fine particles.

It was found from comparison results between Example 1 and Example 2 that the same evaluation results were obtained under the conditions in which the average particle diameter of antibacterial agent fine particles, the thickness of an antibacterial layer, and the tensile strength of a base material were the same as each other, even if the materials used were different from each other.

In contrast, as shown in Comparative Examples 2 to 7, it was found that rainbow unevenness was not sufficiently suppressed in a case where the thickness of an antibacterial layer was smaller than or equal to 5 μm.

In addition, as shown in Comparative Example 1, it was found that warping was not sufficiently suppressed in a case where the tensile strength of a base material was less than 200 MPa.

In Comparative Examples 2 to 7 in which an antibacterial layer was "hydrophobic", the antibacterial properties were insufficient ("D" or "E").

Explanation of References

10: antibacterial layer-attached base material
12: base material
14: antibacterial layer

## Claims

**1.** An antibacterial layer-attached base material comprising:

a base material having optical anisotropy; and
an antibacterial layer which is disposed on at least a part of a surface of the base material,
wherein the antibacterial layer contains antibacterial agent fine particles and a binder,
wherein an average particle diameter of the antibacterial agent fine particles is 0.20 to 1 μm,
wherein a thickness of the antibacterial layer is greater than 5 μm and smaller than or equal to 15 μm, and
wherein a tensile strength of the base material is greater than or equal to 200 MPa.

**2.** The antibacterial layer-attached base material according to claim 1,
wherein the binder is a polymer having a hydrophilic group.

**3.** The antibacterial layer-attached base material according to claim 1 or 2,
wherein a content of the antibacterial agent fine particles in the antibacterial layer is greater than or equal to 2.0 mass% with respect to a total mass of the antibacterial layer.

**4.** A film for a display using the antibacterial layer-attached base material according to any one of claims 1 to 3.

## Patentansprüche

**1.** Antibakterielles Basismaterial, das auf einer Beschichtung aufgebracht ist, umfassend:

ein Basismaterial, das eine optische Anisotropie aufweist; und
eine antibakterielle Schicht, die auf mindestens einem Teil einer Oberfläche des Basismaterials angeordnet ist,
wobei die antibakterielle Schicht ein antibakterielles Mittel aus Feinpartikeln und ein Bindemittel beinhaltet,
wobei ein durchschnittlicher Partikeldurchmesser des antibakteriellen Mittels aus Feinpartikeln 0,20 bis 1 μm ist,
wobei eine Dicke der antibakteriellen Schicht größer als 5 μm und kleiner als oder gleich 15 μm ist und
wobei eine Zugfestigkeit des Basismaterials größer als oder gleich 200 MPa ist.

2. Antibakterielles Basismaterial, das auf einer Beschichtung aufgebracht ist nach Anspruch 1, wobei das Bindemittel ein Polymer ist, das eine hydrophile Gruppe aufweist.

3. Antibakterielles Basismaterial, das auf einer Beschichtung aufgebracht ist nach Anspruch 1 oder 2, wobei ein Gehalt des antibakteriellen Mittels aus Feinpartikeln in der antibakteriellen Schicht größer als oder gleich 2,0 Masseprozent in Bezug auf eine Gesamtmasse der antibakteriellen Schicht ist.

4. Film für eine Anzeige, der das antibakterielle Basismaterial verwendet, das auf einer Beschichtung aufgebracht ist nach einem der Ansprüche 1 bis 3.

## Revendications

1. Matériau de base attaché à une couche antibactérienne comprenant :

un matériau de base présentant une anisotropie optique ; et
une couche antibactérienne qui est disposée sur au moins une partie d'une surface du matériau de base,
dans lequel la couche antibactérienne contient de fines particules d'agent antibactérien et un liant,
dans lequel un diamètre de particule moyen des fines particules d'agent antibactérien est compris entre 0,20 et 1 μm,
dans lequel l'épaisseur de la couche antibactérienne est supérieure à 5 μm et inférieure ou égale à 15 μm, et
dans lequel une résistance à la traction du matériau de base est supérieure ou égale à 200 MPa.

2. Matériau de base attaché à une couche antibactérienne selon la revendication 1, dans lequel le liant est un polymère ayant un groupe hydrophile.

3. Matériau de base attaché à une couche antibactérienne selon la revendication 1 ou 2, dans lequel une teneur en fines particules d'agent antibactérien dans la couche antibactérienne est supérieure ou égale à 2,0% en masse par rapport à une masse totale de la couche antibactérienne.

4. Film destiné à un affichage utilisant le matériau de base attaché à une couche antibactérienne selon l'une quelconque des revendications 1 à 3.

FIG. 1

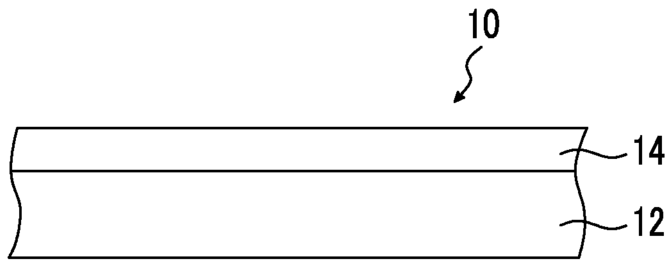

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7291814 A
- JP H07291814 A
- WO 2014025040 A1
- JP 2014215360 A
- JP I995291814 A